**Europäisches Patentamt**

**European Patent Office**

**Office européen des brevets**

(11) Veröffentlichungsnummer: **0 061 505**
**B1**

(12) # EUROPÄISCHE PATENTSCHRIFT

(45) Veröffentlichungstag der Patentschrift: **28.11.84**

(21) Anmeldenummer: **81102286.2**

(22) Anmeldetag: **26.03.81**

(51) Int. Cl.³: **A 43 B 17/14,** A 43 B 13/40, B 29 C 24/02

(54) **Verfahren zur Herstellung einer Polsterbrand- oder Einlegesohle.**

(43) Veröffentlichungstag der Anmeldung:
**06.10.82 Patentblatt 82/40**

(45) Bekanntmachung des Hinweises auf die Patenterteilung:
**28.11.84 Patentblatt 84/48**

(84) Benannte Vertragsstaaten:
**DE GB**

(56) Entgegenhaltungen:
**DE-A-1 704 332**
**DE-B-1 197 785**
**DE-B-1 267 417**
**FR-A-1 406 879**
**US-A-2 917 842**
**US-A-2 917 844**
**US-A-2 917 846**
**US-A-3 418 732**

(73) Patentinhaber: **Firma Carl Freudenberg**
**Höhnerweg 2**
**D-6940 Weinheim/Bergstrasse (DE)**

(72) Der Erfinder hat auf seine Nennung verzichtet

(74) Vertreter: **Weissenfeld-Richters, Helga, Dr.**
**Höhnerweg 2**
**D-6940 Weinheim/Bergstrasse (DE)**

## Beschreibung

Die Erfindung betrifft ein Verfahren zur Herstellung einer Polsterbrand- oder Einlegesohle aus einer ein- oder mehrschichtigen Platte aus einem geschlossenzellig geschäumten, vernetzten Polyolefin.

Aus DE—U—78 05 047 ist eine Platte zur Herstellung einer Polsterbrandsohle bekannt, die aus einer Schaumstoffschicht aus einem geschlossenzelligen vernetzten Polyolefin und gegebenenfalls einer Abdeckschicht besteht. Die Schaumstoffschicht und die Abdeckschicht sind fest miteinander verbunden. Mit Hilfe eines üblichen Stanzeisens lassen sich Polsterbrand- oder Einlegesohlen ausstanzen. Die geschlossenen Zellen der Schaumstoffschicht werden dabei im Bereich der umlaufenden Schnittfläche geöffnet, wodurch die im übrigen vorliegende Glattflächigkeit aller Oberflächen eine unschön wirkende Unterbrechung erfährt. Beim Gebrauch kann sich außerdem Schmutz in diesen geöffneten Zellen ablagern, was in hygienischer Hinsicht unbefriedigend ist und es ist deshalb üblich, die Schnittfläche in einem gesonderten Arbeitsgang durch Aufkaschieren einer Deckschicht abzuschließen. Derartige mit einer Deckschicht nachträglich abgeschlossene Einlegesohlen bzw. Pelotten sind auch aus US—A—29 17 846 und FR—A—14 06 879 bekanntgeworden. Es ist nachteilig, daß sich die aufkaschierte Deckschicht oft nur schwierig mit ausreichender Sicherheit verankern läßt und es kommt unter den sich überlagernden Beanspruchungen aus der dynamischen Zusammenpressung der Schaumstoffschicht mit den beim Gehen auftretenden Walkbeanspruchungen häufig schon nach kurzem Gebrauch zu einer Ablösung der auf die Schnittfläche aufkaschierten Deckschicht. Die Verwendung derartiger Polsterbrandsohlen ist daher insbesondere in offenem Schuhwerk problematisch.

Der Erfindung liegt die Aufgabe zugrunde, ein Verfahren zur Herstellung einer Polsterbrand- und Einlegesohle zu entwickeln, das die Verwendung aufkaschierter Deckschichten vermeidet. In einem einzigen Arbeitsgang soll eine geschlossene fertige Polsterbrand- und Einlegesohle hergestellt werden, die sich durch ein gefälliges Aussehen auszeichnet und die auch in offenem Schuhwerk Verwendung finden kann.

Die Aufgabe wird bei einer Polsterbrand- oder Einlegesohle der eingangs genannten Art durch die kennzeichnenden Merkmale des Patentanspruchs 1 gelöst. Auf vorteilhafte Ausgestaltungen nehmen die Unteransprüche Bezug.

Bei der vorgeschlagenen Polsterbrand- oder Einlegesohle ist die Oberseite entlang der umlaufenden Randkante gegen die Grundfläche gewölbt und wird von dieser begrenzt. Es ist somit nur die Grundfläche und die Oberseite vorhanden, und diese sind aufgrund der geschlossenen Zellstruktur in sich geschlossen. Die Einlagerung von Schmutz ist dadurch nicht möglich.

Durch die Wölbung der Oberseite im Bereich der Randkante gegen die Grundfläche wird ein polsterähnliches, gefälliges Aussehen erzielt, was eine Verwendung in offenem Schuhwerk begünstigt.

Von den zur Verfügung stehenden Polyolefinschäumen werden bevorzugt geschlossenzellig geschäumte, vernetzte Polyethylenschäume verwendet. Das Raumgewicht kann im Bereich von 30 bis 300 kg/m³ variiert werden, wobei der bevorzugte Bereich 50 bis 120 kg/m³ beträgt. Polyethylenschäuse dieser Art sind in physiologischer Hinsicht völlig unbedenklich, sie besitzen neben einer gewissen Elastizität ein gutes Dämpfungsverhalten, was in orthopädischer Hinsicht von Vorteil ist sowie eine gute mechanische Widerstandsfähigkeit, die ihre Verwendung in bezug auf die Herstellung von Polster- oder Einlegeschlen ideal erscheinen läßt. Aus der begrenzten Plastizität ergibt sich eine gute Selbstanpassung an den Fuß des Trägers, und damit ein sicherer Sitz. Entsprechend ausgestattetes Schuhwerk ist daher ideal zum Wandern, Bergsteigen usw. geeignet. Weitere Verbesserungen Lassen sich durch eine dem Fuß angepasste, orthopädische Ausbildung der Oberseite erreichen.

Eine solche Polsterbrand- oder Einlegesohle kann im Hinblick auf besondere Ansprüche vielfältig modifiziert werden. Es läßt sich beispielsweise das Klima zwischen der Fußsohle und der Oberseite der Polsterbrandsohle dadurch verbessern, daß Letztere mit einer sie senkrecht ganz durchdringenden Lochung versehen wird. Eine solche Lochung wird bevorzugt in den Bereichen angebracht, in denen eine weniger große orthopädische Belastung auftritt, beispielsweise im Bereich des Mittelfußknochens der großen Zehe. Dieser Bereich des Fußes führt bekanntlich beim Gehen die größten Atmungsbewegungen aus, und diese können bei einer entsprechend angebrachten Lochung im Sinne eines Pumpvorganges besonders vorteilhaft für die erwünschten Lüftwechsel ansgenutzt werden.

Der Schaumstoff hat die Gestalt einer Platte, und diese kann gegebenenfalls mehrschichtig ausgebildet sein. Die einzelnen Schichten können sich hinsichtlich ihres Raumgewichtes beliebig voneinander unterscheiden, wobei es jedoch bevorzugt wird, das Raumgewicht der einzelnen Schichten in Richtung der Oberseite kontinuierlich zu steigern. Hierdurch wird insbesondere eine schwammig erscheinende Oberseite mit den daraus resultierenden Nachteilen vermiedem und der Fuß des Trägers erhält das Gefühl eines sicheren Haltes. Die einzelnen Schaumstoffschichten können durch Flammkaschierung untereinander verbunden sein.

Zur Erzielung eines gefälligen Aussehens und anderer vorteilhafter Eigenschaften hat es sich als sinnvoll erwiesen, wenn auf die Oberseite eine Beschichtung aus einem flexiblen Flächengebilde aufgebracht wird. Dieses soll durchgehend mit der Oberseite verbunden werden, und es kann elastische Eigenschaften haben, was jedoch nicht zwingend erforderlich ist. Besonders geeignet sind textile Stoffe, wie beispielsweise Gewirke oder Frotteestoffe sowie Folien, Kunstleder oder Leder, die auch zu einer Verbesserung der mechanischen Widerstandsfähigkeit beitragen können.

Eine gegebenenfalls formgebende Versteifung läßt sich erzielen, wenn auf die Grundfläche ein Brandschlenmaterial aufkaschiert wird. Besonders geeignet sind diesbezüglich Flächengebilde aus Kunstharz gebundenen, natürlichen und/oder künstlichen Fasern, beispielsweise die einschlägig verwendeten Leder- oder Zellulosefaserprodukte sowie Kunststoffolien.

Aus DE—A—27 42 162 ist es bekannt, ein Schuhformteil oder eine Schuheinlage durch eine kombinierte Wärmedruckbehandlung eines Rohlings aus einem geschlossenzellig geschäumten, vernetzten Polyolefin zu erzeugen. Um dabei die gewünschten, unterschiedlichen Verdichtungsgrade zu erhalten, muß der Rohling zuvor in eine spezielle Gestalt gebracht werden, was relativ aufwendig und teuer ist.

Der Erfindung liegt demgegenüber die Aufgabe zugrunde, ein Verfahren zur Herstellung einer Polsterbrand- oder Einlagesohle der vorstehend beschriebenen Art zu entwickeln, bei dem eine ein- oder mehrschichtige Platte aus einem geschlossenzellig geschäumten, vernetzten Polyolefin ohne vorausgehende Bearbeitung als Rohling einsetzbar ist, der bis zur plastischen Formbarkeit erwärmt und ohne großen Aufwand in die gewünschte Gestalt gebracht werden kann.

Zur Lösung dieser Aufgabe wird erfindungsgemäß ein Verfahren vorgeschlagen, das durch die kennzeichnenden Merkmale des Anspruchs gekennzeichnet ist. Auf vorteilhafte Ausgestaltungen nehmen die Ansprüche 2 bis 6 Bezug.

Bei dem vorgeschlagenen Verfahren wird die eingesetzte Platte aus einem geschlossenzellig geschäumten, vernetzten Polyäthylen auf eine über den gesamten Querschnitt gleichmäßige Temperatur von 110 bis 140°C erwärmt, auf die die spätere Oberseite bildende Seite wird ein kaltes Stanzeisen aufgesetzt und gegen die die spätere Grundfläche bildende Seite der Platte bis zur völligen Durchtrennung gepresst. Das Stanzeisen wird anschließend so lange in dieser Stellung belassen, daß eine Rückformung der im Bereich des Stanzeisens deformierten Platte durch Abkühlung vermieden wird. Eine Erwärmung auf eine höhere Temperatur führt zu einer Abrundung der Oberseite an der Randkante mit einem großen Radius, was unerwünscht ist. Eine Erwärmung auf eine niedrigere Temperatur führt zu kleinen Radien und schließlich zu einer unvollkommenen oder sogar fehlenden Verschweißung der Randkante in sich selbst. In die dann verbleibenden aufgeschnittenen Zellen kann sich Schmutz einlagern, was in hygienischer und geschmacklicher Hinsicht unbefriedigend ist.

Eine orthopädische Ausbildung der Oberseite läßt sich im selben Arbeitsgang erhalten, wenn ein Stanzeisen mit einem darin eingesetzten, entsprechend ausgebildeten Prägestempel verwendet wird. Die Temperatur sowohl des Stanzeisens als auch des Prägestempels soll 10 bis 40°C betragen. Durch einstellen des Abstandes zwischen der Schneide des Stanzeisens und der Prägefläche des Prägestempels läßt sich der Verdichtungsgrad und damit die Federelastizität der Einlegesohle auf einen optimalen Wert festlegen.

Das vorgeschlagene Verfahren macht sich die Tatsache zu Nutze, daß die gasgefüllten Zellen eines geschlossenzellig geschäumten, vernetzten Polyolefins einer mechanischen Belastung bei Erreichen der Erweichungstemperatur nur geringen Widerstand entgegensetzen. Die Oberseite erhält dadurch entlang der umlaufenden Randkante eine gegen die Grundfläche gewölbte Abrundung, die Schaftkantig von der Grundfläche begrenzt wird. Eine Schnittfläche mit geöffneten Zellen ist nicht erkennbar.

Das Verfahren läßt sich gleichgut anwenden beim Ausstanzen einer Polsterbrand- oder Einlegesohle aus einer ein- oder mehrschichtigen Bahn aus einem geschlossenzellig geschäumten, vernetzten Polyolefin, und es ist demzufolge nicht mehr erforderlich, für die Herstellung von Polsterbrand- oder Einlegesohlen mit abweichender Elastizität unterschiedliche Warkzeuge zu beschaffen. Es genügt vielmehr, wenn für jede spezielle Schuhgröße ein einziges Stanzeisen vorhanden ist, das sich außerdem wesentlich billiger herstellen läßt als ein spezielles Formwerkzeug. Variierende Bezugsstoffe auf der Deckfläche oder versteifende Flächengebilde auf der Grundfläche erfordern keinerlei Veränderungen.

Die erzeilbare Taktzeit des vorgeschlagenen Verfahrens läßt sich wesentlich verkürzen durch Verwendung gekühlter Werkzeuge. Die Kühlung kann indirekt sein, beispielsweise über eine gekühlte Pressplatte oder direkt, beispielsweise durch Anblasen mit Druckluft. Letzterer Methode wird der Vorzug gegeben, weil das kühlende Medium von außen und innen bis unmittelbar an die Schnittkante herangeführt werden kann. Der Effekt der Kühlung läßt sich wesentlich verbessern durch Anbringen von Kühlrippen am Stanzeisen bzw. Prägestempel.

Es ist von wesentlicher Bedeutung in bezug auf die Praktizierbarkeit des vorgeschlagenen Verfahrens, daß die eingesetzten Platten zumindest im Bereich der deformierten Zonen ohne jedes Temperaturgefälle durchgehend auf eine bestimmte Temperatur gebracht werden. Das kann am besten geschehen in einem Ofen mit ruhender oder nur schwach bewegter Luft. Die erforderliche Zeit läßt sich kompensieren durch eine entsprechend großformatige Auslegung. Eine entsprechende Erwärmung ist auch mit IR-Strahlern möglich, sofern die Dosisleistung niedrig ist.

Das vorgeschlagene Verfahren wird nachfolgend anhand der in der Anlage beigefügten Zeichnung näher erläutert. Es zeigen:

Figur 1 eine auf einem Träger ruhende Platte zur Herstellung der erfindungsgemäßen Polsterbrand- oder Einlegesohle.

Figur 2 die erwärmte Platte nach Figur 1 nach dem Aufsetzen und Eindrücken des Stanzeisens bis zur vollständigen Durchtrennung an den Randkanten.

Figur 3 die nach Wegnahme des Stanzeisens aus Figur 2 erhaltene Polsterbrand- oder Einlegesohle im Profil.

Figur 4 eine Polsterbrandsohle ähnlich Figur 3 mit einer aus mehreren Schichten bestehenden Schaumstoffplatte.

Figure 5 die erwärmte Platte nach Figur 1 nach dem Aufsetzen und Eindrücken des mit einem Prägestempel und einer Kühleinrichtung versehenen Stanzeisens.

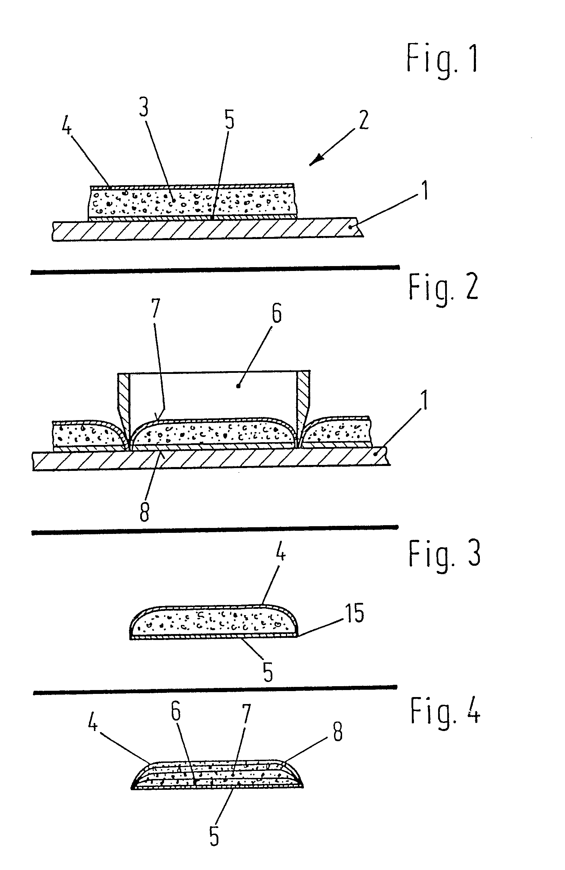

Die in Figur 1 auf einem Gummiträger 1 gezeigte Platte 2 besteht aus einem geschlossenzellig geschäumten, vernetzten Polyethylen 3 mit einem Raumgewicht von 90 kg/m³. Auf die Oberseite ist ein Baumwolltrikot 4 mit einem Flächengewicht von 80 g/m² aufkaschiert, auf die Unterseite ein 1,8 mm dickes Brandschlenmaterial 5 aus Kunstharz gebundenen Lederfasern.

Die Platte 2 gemäß Figur 1 wird mit Hilfe des Gummiträgers 1 in einen Heiztunnel überführt und langsam und gleichmäßig auf eine Temperatur von 130°C erwärmt. Auf die Oberseite der so erwärmten Platte wird anschließend ein Stanzeisen 6 aufgesetzt, das gekühlt ist, und in der in Figur 2 dargestellten Weise bis zur völligen Durchtrennung gegen den Träger 1 gepresst. Die Oberseite 7 der dabei ausgestanzten Polsterbrand- oder Einlegesohle erfährt dabei entlang einer umlaufenden Randkante eine gegen die Grundfläche gerundete Abwölbung, die von der Grundfläche 8 begrenzt wird.

Die in Figur 3 im Querschnitt gezeigte Polsterbrand- oder Einlegesohle läßt eine Schnittfläche im eigentlichen Sinne nicht erkennen.

Die Oberseite wird scharfkantig durch die Grundfläche begrenzt. Die in diesem Bereich enthaltenen und teilweise durch den Stanzvorgang angeschnittenen Zellen sind vollständig kollabiert zu einem aus porenfreiem Kunststoff bestehenden Saum 15.

In Figur 4 ist eine Polsterbrandsohle in geschnittener Darstellung wiedergegeben, die eine Schaumstoffplatte aus drei durch Flammkaschierung untereinander verbundenen Schichten enthält. Alle Schichten bestehen aus einem geschlossenzellig geschäumten, vernetzten Polyethylen. Die Schicht 6 hat ein Raumgewicht von 75 kg/m³, die Schicht 7 ein solches von 90 kg/m³, die Schicht 8 ein solches von 120 kg/m³.

Auf die Oberseite 4 ist ein Polyurethanschaum-Kunstleder aufkaschiert, auf die Grundfläche eine versteifend wirkende Platte aus Polyethylen mit einer Diche von 2,1 mm.

Infolge der gleichmäßigen Durchwärmung der Platte ergibt sich während des Stanzvorganges eine gleichmäßige Abnahme der Dicke jeder einzelnen der genannten Schichten in Richtung der Schnittkante. In gleichem Maße ergibt sich eine Verminderung der elastischen Nachgiebigkeit und eine Steigerung der Widerstandsfähigkeit der Randkante gegenüber mechanischen Beschädigungen, was von großem Vorteil in offenem Schuhwerk ist.

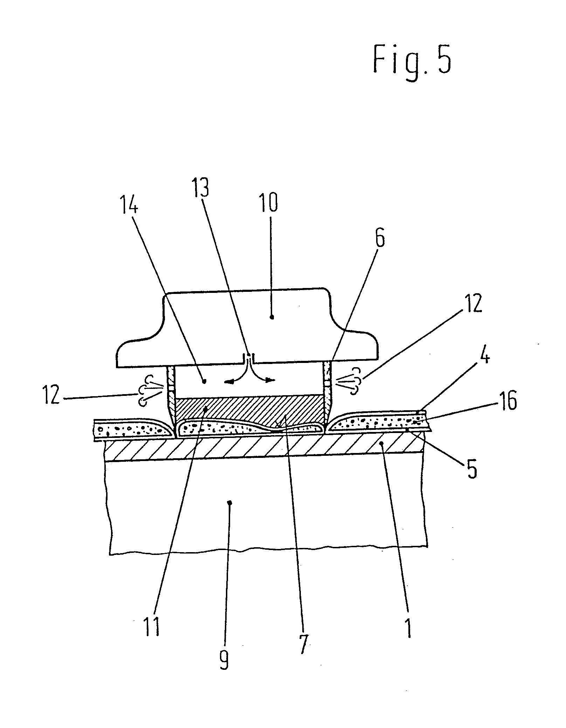

Figur 5 nimmt Bezug auf die Durchführung des vorgeschlagenen Verfahrens in bezug auf die Herstellung einer Polsterbrand- oder Einlegesohle mit orthopädisch geformter Oberseite 7. Das eingesetzte Material kann vollständig dem in Figur 1 gezeigten entsprechen, und eine ein- oder mehrschichtig aufgebaute Schaumstoffplatte 16 enthalten. Die die Oberseite und die Grundfläche abdeckenden Schichten 4 und 5 können aus jedem einschlägig verwendeten Werkstoff bestehen, sofern der Schmelz- bzw. Zersetzungspunkt über demjenigen des Werkstoffes der Schaumstoffschicht 16 liegt.

Die Platte befindet sich wiederum auf einem Gummiträger 1, und wird in einem Ofen mit schwachbewegter Luft auf eine Temperatur von 130°C erwärmt.

Nach der Entnahme aus dem Ofen wird das gekühlte Stanzeisen 14 mit eingesetztem Prägestempel 11 auf die Oberseite der Platte aufgesetzt, und zusammen mit diesem in eine Stanze mit den gegeneinander pressbaren Pressbacken 9 und 10 eingebracht. Diese werden anschließend gegeneinander gedrückt, wobei der Schaumstoff der Platte zunächst von der Schneide des Stanzeisens und schließlich auch von dem Prägestempel zusammengepresst und in der gewünschten Weise umgeformt wird, bis es schließlich zur völligen Durchtrennung im Bereich der umlaufenden Randkante kommt. Die Gestalt des Formlinges wird durch zügige Abkühlung über den Prägestempel 11 bzw. das Stanzeisen 6 stabilisiert. Dazu wird Druckluft über die Düse 13 in den Zwischenraum 14 zwischen dem Stanzeisen 6, dem Prägestempel 11 und der Pressplatte 10 eingeblasen, die beim Entweichen über die Bohrungen 12 überschüssige Wärme abführt. Menge und Geschwindigkeit der Druckluft müssen so gesteuert werden, daß die Temperatur der an dem Formling anliegenden Oberflächen des Werkzeuges den Bereich von 20 bis 40°C nicht überschreitet. Liegt die Temperatur niedriger, dann wird der Schaumstoff im Bereich der Schnittkante nur unvollständig in sich verschweißt, so daß Poren enthalten sein können, liegt die Temperatur hingegen höher, dann wird die mechanische Widerstandsfähigkeit des Schaumstoffes zu sehr geschwächt und es gelingt nur noch unvollständig, die Deckfläche entlang der umlaufenden Randkante mit kleinen Radien von 2 bis 3 mm abzuwölben. Der Anwendung entsprechender Polsterbrand- oder Einlegesohlen in modischem Schuhwerk sind dadurch in einem solchen Falle enge Grenzen gesetzt.

**Patentansprüche**

1. Verfahren zur Herstellung einer Polsterbrand- oder Einlegesohle aus einer ein- oder mehrschichtigen Platte aus einem geschlossenzellig geschäumten vernetzten Polyolefin, wobei diese Platte bis zur plastischen Formbarkeit erwärmt und in die gewünschte Gestalt gebracht wird, dadurch gekennzeichnet, daß die Platte (2) auf eine über den gesamten Querschnitt gleichmäßige Temperatur von 110 bis 140°C erwärmt wird, daß auf die die Oberseite bildende Fläche ein kaltes Stanzeisen (6) aufgesetzt und gegen die die Grundfläche bildende Seite der Platte bis zur völligen Durchtrennung gepreßt wird, und daß das Stanzeisen (6) solange in dieser Stellung belassen wird, daß eine Rückformung der im Bereich des Stanzeisens (6) deformierten Platte (2) vermieden wird.

2. Verfahren nach Anspurch 1, dadurch gekennzeichnet, daß dem Stanzeisen (6) soviel Wärme entzogen wird, daß dessen Temperatur zwischen 20 und 40°C liegt.

3. Verfahren nach Anspruch 1, dadurch gekennzeichnet, daß die Platte (2) auf eine über den gesamten Querschnitt gleichmäßige Temperatur von 110 bis 140°C erwärmt wird, daß auf die die Oberseite bildende Fläche ein kaltes Stanzeisen (6) mit einem darin eingesetzten kalten Prägestempel (11) aufgesetzt und zusammen mit diesem gegen die die Grundfläche bildende Seite der Platte (2) bis zur völligen Durchtrennung und Ausformung der Oberfläche gepreßt wird, wonach das Stanzeisen (6) und der Prägestempel (11) solange in dieser Stellung belassen werden, daß eine Rückformung der deformierten Platte (2) vermieden wird.

4. Verfahren nach Anspruch 3, dadurch gekennzeichnet, daß dem Stanzeisen (6) und dem Prägestempel (11) soviel Wärme entzogen wird, daß deren Temperatur zwischen 20 und 40°C liegt.

5. Verfahren nach Anspruch 1 bis 4, dadurch gekennzeichnet, daß die Platte (2) auf eine Temperatur von 130°C erwärmt wird.

6. Verfahren nach Anspruch 1 bis 5, dadurch gekennzeichnet, daß die Platte (2) in einem Ofen durch ruhende oder nur schwach bewegte Luft oder IR-Strahlung erwärmt wird.

**Revendications**

1. Procédé de fabrication d'une semelle intérieure constituée d'une plaque à couche simple ou couche multiple en polyoléfine réticulé, poreux à alvéoles fermées, qui est réchauffée jusqu'à malléabilité plastique et à laquelle est appliquée la forme voulue, caractérisé en ce que la plaque (2) est réchauffée sur toute sa surface à une température uniforme de 110 à 140°C, en ce qu'un poinçon froid (6) est appliqué sur la surface formant le côté supérieur et pressé contre le côté formant la surface de base de la plaque jusqu'à séparation complète et en ce que le poinçon (6) est maintenu aussi longtemps dans cette position qu'il est nécessaire pour éviter une déformation réversible de la plaque (2) déformée dans la région du poinçon (6).

2. Procédé selon la revendication 1, caractérisé en ce que l'on enlève au poinçon (6) autant de chaleur que nécessaire pour que sa température se trouve entre 20 et 40°.

3. Procédé selon la revendication 1, caractérisé en ce que la plaque (2) est réchauffée sur toute la surface à une température uniforme de 110 à 140°C, en ce qu'un poinçon froid (6) avec une étampe froide incorporée (11) est appliqué sur la surface formant le côté supérieur et pressé ensemble avec celle-ci contre le côté formant la surface de base de la plaque (2) jusqu'à séparation et formage complet de la surface, après quoi le poinçon (6) et l'étampe (11) sont maintenus dans cette position aussi longtemps que nécessaire pour éviter une déformation réversible de la plaque déformée.

4. Procédé selon la revendication 3, caractérisé en ce que l'on enlève au poinçon (6) et à l'étampe (11) autant de chaleur que nécessaire pour que sa température se trouve entre 20 et 40°C.

5. Procédé selon les revendications 1 à 4, caractérisé en ce que la plaque (2) est réchauffée à une température de 130°C.

6. Procédé selon les revendication 1 à 5, en ce que la plaque (2) est réchauffée dans un four avec de l'air immobile ou en légère circulation au moyen de rayonnement infrarouge.

**Claims**

1. Process for the preparation of a padded or other insole, in which a single or multi-layer sheet of a closed-cell, foamed, cross-linked polyolefine is heated to plastic deformability and brought into the desired form, characterised in that the sheet (2) is heated to a temperature of 110 to 140°C evenly across its entire cross-section, that a cold stamping tool (6) is placed on the surface forming the upper side and pressed towards the side of the sheet forming the base surface to effect complete separation, and that the stamping tool (6) is then left in this position for a time sufficient to avoid a return in the area of the sheet (2) deformed by the stamping tool (6).

2. Process according to claim 1, characterised in that sufficient heat is removed from the stamping tool (6) that its temperature is between 20 and 40°C.

3. Process according to claim 1, characterised in that the sheet (2) is heated to a temperature of 110 to 140°C evenly across its entire cross-section, that a cold stamping tool (6) having therein a cold imprint stamp (11) is placed on the surface forming the upper side and pressed together with this towards the side of the sheet (2) forming the base to effect complete separation and shaping of the upper surface, whereupon the stamping tool (6) and the imprint stamp (11) are left in this position for a sufficient time that a return of the deformed sheet (2) is avoided.

4. Process according to claim 3, characterised in that sufficient heat is removed from the clamping tool (6) and the imprint stamp (11) that their temperature is between 20 and 40°C.

5. Process according to claims 1 to 4, characterised in that the sheet (2) is heated to a temperature of 130°C.

6. Process according to claims 1 to 5, characterised in that the sheet (2) is heated in an oven by resting or only weakly agitated air or IR rays.

Fig. 1

Fig. 2

Fig. 3

Fig. 4

Fig. 5